# EUROPÄISCHE PATENTSCHRIFT

(11) **EP 0 387 823 B1**
(45) Veröffentlichungstag und Bekanntmachung des Hinweises auf die Patenterteilung: **26.01.1994**
(21) Anmeldenummer: 90104781.1
(22) Anmeldetag: 14.03.1990
(51) Int. Cl.: C09B 69/10, G02B 1/04, G02B 1/10

(54) **Neue Polymere und ihre Verwendung**
Polymers and their use
Polymères et leur utilisation

(30) Priorität: 16.03.1989 DE 3908458
(43) Veröffentlichungstag der Anmeldung: 19.09.1990
(73) Patentinhaber: BASF Aktiengesellschaft, 67063 Ludwigshafen (DE)
(72) Erfinder: Wegner, Gerhard, Prof. Dr., D-6500 Mainz-Drais (DE); Caseri, Walter, Dr., CH-8049 Zuerich (CH); Sauer, Thomas, D-6502 Mainz-Kostheim (DE)

(56) Entgegenhaltungen:
- CHEMICAL ABSTRACTS, Band 99, Nr. 22, 28. November 1983, Columbus, Ohio, USA ORTHMANN E.A. et al. "Synthesis and electro- chemical doping of phthalo- cyaninatopolysiloxane" Seite 26, 1. Spalte, Zu- sammenfassung-Nr. 176 636v

## Beschreibung

Die Erfindung betrifft neue Polymere mit Phthalocyanin-Einheiten in der Hauptkette, wobei die Phthalocyanin-Einheiten über axiale Bindungen an ein Zentralmetallatom in die Polymerhauptkette eingebunden sind. Die Erfindung betrifft des weiteren die Verwendung der neuen Polymeren, insbesondere zur Herstellung ultradünner Schichten und optisch klarer Filme mit extrem hoher Volumenkonzentration an Phthalocyaninresten.

Polymere, die als Kettenglieder zweiwertige Reste von Metallophthalocyaninen eingebaut enthalten, wie z.B. Phthalocyaninato-Polysiloxane oder Phthalocyaninato-Polygermyloxane sind schon bekannt (vgl. u.a. in Org. Chem., Band 2, Seiten 1064-1065 (1963), Journ. of Amer. Chem. Soc., Band 105, Seiten 1539-1550 (1983), DE-A-32 42 712). In der EP-A-246 500 und in Angew. Chem., Band 98, Seiten 1114-1115 (1986) wird der Einsatz von löslichen und/oder schmelzbaren metallomakrocyclischen Polymeren, wie z.B. peripher hydrophobsubstituierten Phthalocyaninato-Polysiloxanen bzw. Polygermyloxanen, für die Herstellung von festen, dünnen, geordneten Schichten mit molekularkontrolliertem Aufbau beschrieben. Mit den peripher substituierten Phthalocyanato-Polysiloxanen bzw. -Polygermyloxanen lassen sich Monomolekularschichtstrukturen (Monolayer) oder Multimolekularschichtstrukturen (Multilayer) erzeugen, die über die gesamte Schicht eine einheitliche Molekülorientierung ohne Bildung von Domänen besitzen und sich daher durch eine Reihe von besonderen und vorteilhaften Eigenschaften, wie z.B. optische Anisotropie, auszeichnen.

Aufgabe der vorliegenden Erfindung war es, weitere, neue Polymere mit Phthalocyanin-Einheiten in der Polymerhauptkette aufzuzeigen, die sich durch besondere und vorteilhafte Eigenschaften auszeichnen, die vielfältig anwendbar sind und sich insbesondere zur Herstellung von ultradünnen Schichten mit vorteilhaften Eigenschaften eignen.

Diese Aufgabe wurde überraschenderweise durch die neuen Phthalocyaninato-Polymeren der nachfolgend näher beschriebenen Art gelöst.

Gegenstand der Erfindung sind dementsprechend Polymere, die aus wiederkehrenden Einheiten der allgemeinen Formel (I) 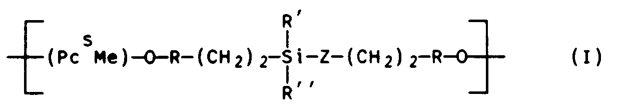
aufgebaut sind, worin bedeuten:
- Pc^{s}:: einen zweifach an den zum Zentrum gerichteten Stickstoffatomen deprotonierten Phthalocyaninrest mit peripheren Substituenten;
- Me:: Si oder Ge als das in die Polymerhauptkette eingebundene Zentralatom des Phthalocyaninrestes Pc^{s};
- R:: eine lineare oder verzweigte Alkylen-Gruppe mit 1 bis 18 C-Atomen;
- R', R'':: gleiche oder verschiedene Reste und unabhängig voneinander einen Alkylrest, insbesondere mit 1 bis 12 C-Atomen, einen Cycloalkylrest, insbesondere mit 5 oder 6 C-Atomen, einen unsubstituierten oder alkylsubstituierten Phenylrest oder einen Alkoxy-Rest, insbesondere mit 1 bis 12 C-Atomen;
- Z:: entweder eine Siliciumkohlenstoff-Bindung oder eine der Gruppen 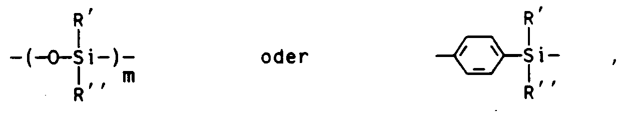 worin m steht für eine ganze Zahl gleich oder größer 1, insbesondere im Bereich von 1 bis 10, und R' und R'' die vorstehend angegebene Bedeutung haben.

Gegenstand der Erfindung sind weiterhin ultradünne Schichten und optisch klare Filme, hergestellt aus den neuen erfindungsgemäßen Polymeren sowie deren Verwendung.

Die erfindungsgemäßen Polymeren sind aus den wiederkehrenden Einheiten der allgemeinen Formel (I) aufgebaut, d.h. ihre Polymerkette wird - abgesehen von Endgruppen - von den wiederkehrenden Einheiten der allgemeinen Formel (I) gebildet, wobei in den erfindungsgemäßen Polymeren die wiederkehrenden Einheiten der allgemeinen Formel (I) untereinander gleich oder auch verschieden sein können. Der mittlere Polymerisationsgrad n der erfindungsgemäßen Polymeren, d.h. die Anzahl der wiederkehrenden Einheiten der allgemeinen Formel (I), aus denen die erfindungsgemäßen Polymeren aufgebaut sind, kann in weiten Grenzen variieren. Zur Erzielung vorteilhafter anwendungstechnischer Eigenschaften hat es sich als günstig erwiesen, wenn der mittlere Polymerisationsgrad n der erfindungsgemäßen Polymeren im allgemeinen mindestens 5 beträgt, wobei n vorzugsweise im Bereich von 5 bis 100 liegt. Als besonders vorteilhaft, im Hinblick auf ihre Herstellbarkeit und ihre anwendungstechnischen Eigenschaften, haben sich solche erfindungsgemäßen Polymeren erwiesen, deren mittlerer Polymerisationsgrad n = 5-20 beträgt. Die erfindungsgemäßen Polymeren sind dabei im allgemeinen in einem organischen, mit Wasser nicht mischbaren Lösungsmittel löslich und/oder schmelzbar, was insbesondere für ihre Verwendung zu Herstellung von ultradünnen Schichten oder optisch klaren Filmen wichtig und bedeutungsvoll ist. Vorzugsweise sind die erfindungsgemäßen Polymeren dabei in solchen organischen, mit Wasser nicht mischbaren Lösungsmitteln löslich, die bei Raumtemperatur leicht verdampfbar sind, wie z.B. Chloroform.

Die Gruppe (Pc^{s}Me) in den wiederkehrenden Einheiten der allgemeinen Formel (I) stellt eine Metallophthalocyanin-Gruppe dar, bei der das Metallatom Me Silicium oder Germanium bedeutet, das Zentralmetallatom des Phthalocyanin-Ringsystems darstellt und in die Polymerkette der erfindungsgemäßen Polymeren in Form von -O-Me-O-Gruppierungen eingebunden ist. Als Zentralmetallatom Me für die erfindungsgemäßen Polymeren kommen dabei Silicium und/oder Germanium in Betracht, wobei Silicium als Zentralmetallatom bevorzugt ist. Bei dem um das Zentralmetallatom Me angeordneten und über axiale Bindungen an das Zentralmetallatom Me gebundenen Phthalocyaninringsystem Pc^{s} handelt es sich um einen zweifach an den zum Zentrum gerichteten Stickstoffatomen deprotonierten Phthalocyaninrest, der periphere Substituenten trägt. Unter "peripheren" oder "äußeren" Substituenten werden dabei solche Substituenten verstanden, die an der Peripherie, d.h. also den Benzolringen, des Phthalocyanin-Ringsystems angeordnet sind. Die peripheren Substituenten dienen insbesondere der Erzielung der gewünschten Lösbarkeit und/oder Schmelzbarkeit der erfindungsgemäßen Polymeren. Als periphere Substituenten kommen dabei an sich beliebige organische, insbesondere hydrophob wirkende Reste, d.h. Reste ohne hydrophile Endgruppen, in Betracht. So kann es sich bei den peripheren Substituenten des Phthalocyanin-Ringsystems Pc^{s} beispielsweise um aliphatische Reste, etwa langkettige Alkyl- oder langkettige Alkoxy-Reste, um aromatische Reste, etwa Arylgruppen, oder um gemischt aliphatisch-aromatische Reste handeln, wobei die peripheren Substituenten auch Heteroatome, beispielsweise Etherbindungen, oder Heteroatome enthaltende Gruppen, wie beispielsweise Carbonylgruppen oder Sulfonamidgruppen, enthalten können, solange hierdurch die hydrophobe Wirkung dieser peripheren Substituenten nicht beeinträchtigt wird. Die organischen Reste für die peripheren Substituenten können dabei gleichermaßen linear oder verzweigt sein. In aller Regel sind die erfindungsgemäßen Polymeren hydrophob und in Wasser unlöslich.

Die Gruppe (Pc^{s}Me) in den wiederkehrenden Einheiten der allgemeinen Formel (I) läßt sich durch das nachfolgende allgemeine Formelbild (II) 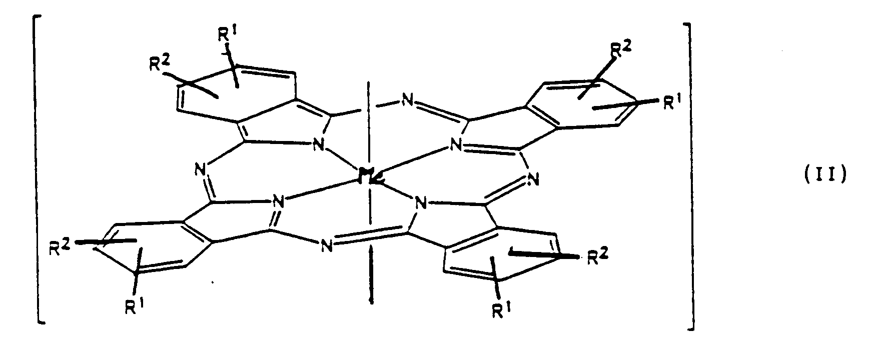
darstellen und illustrieren. In dem allgemeinen Formelbild (II) stellt Me das Zentralmetallatom dar und steht für Silicium oder Germanium, insbesondere aber für Silicium. Die peripheren Substituenten R¹ und R² des Phthalocyaninringsystems können dabei gleich oder verschieden sein. Vorzugsweise handelt es sich bei R¹ und R² um periphere Substituenten, welche nichtpolare, hydrophobe Endgruppen aufweisen. Als Substituenten R¹ und R² kommen die vorstehend angesprochenen organischen Reste in Betracht, die gegebenenfalls Heteroatome oder Heteroatome enthaltende Gruppen enthalten können, wobei einer der Reste R¹ oder R² auch ein Wasserstoffatom darstellen kann. Vorzugsweise stehen jedoch beide Reste R¹ und R² in dem allgemeinen Formelbild (II) für einen organischen Rest. Als Beispiele für die peripheren Substituenten R¹ und R² seien genannt: Alkylreste, Alkoxyreste, Alkoxyalkylreste, Arylreste, Alkarylreste, Aralkylreste oder R¹ und R² können zusammen auch den Rest eines ankondensierten aromatischen Ringsystems darstellen. Als periphere Substituenten bevorzugt sind dabei langkettige Alkylgruppen, insbesondere solche mit 6 bis 30 C-Atomen, und langkettige Alkoxygruppe, insbesondere solche mit 6 bis 30 C-Atomen. Als besonders vorteilhaft hat es sich erwiesen, wenn jeder Phenylring des Phthalocyaninringsystems mindestens einen langkettigen Alkylrest oder mindestens einen langkettigen Alkoxyrest trägt. Vorzugsweise handelt es sich jedoch bei den beiden peripheren Substituenten R¹ und R² um eine langkettige Alkylgruppe und/oder eine langkettige Alkoxygruppe, wobei dann R¹ und R² in aller Regel, aber nicht zwingenderweise, gleich sind.

Als Beispiel für eine bevorzugte Gruppe (Pc^{s}Me) in den wiederkehrenden Einheiten der allgemeinen Formel (I) sei das in dem allgemeinen Formelbild (III) 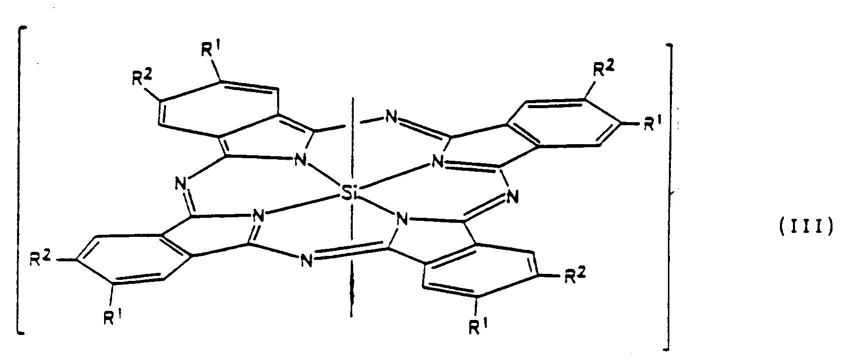
wiedergegebene Phthalocyaninringsystem mit einem Si-Zentralatom angeführt. In dem allgemeinen Formelbild (III) kommt den peripheren Substituenten R¹ und R² die vorstehend angegebene Bedeutung zu. Als Beispiele für die Reste R¹ und R² seien stellvertretend die -OC₈H₁₇- oder die -OC₁₂H₂₅-Gruppe genannt.

In den wiederkehrenden Einheiten der allgemeinen Formel (I) stellt R insbesondere eine lineare Alkylen-Gruppe, vorzugsweise mit 2 bis 10 C-Atomen, z.B. die -C₂H₄-Gruppe, dar. Als Beispiele für die Reste R' und R'' in der allgemeinen Formel (I) seien die Methyl-, Ethyl- und Phenylgruppe genannt. Besonders günstige Eigenschaften haben solche erfindungsgemäßen Polymeren, die aus wiederkehrenden Einheiten der allgemeinen Formel (I) aufgebaut sind, worin Z für die Gruppe -(O-SiR'R'')ₘ- steht. Als Beispiele für R' und R'' in dieser Gruppe seien wiederum der Methyl-, Ethyl- oder Phenyl-Rest genannt. m steht für eine ganze Zahl gleich oder größer als 1, beispielsweise für den mittleren Polymerisationsgrad eines Siloxan-Prepolymeren, und liegt insbesondere im Bereich von 2 bis 10.

Die erfindungsgemäßen Polymeren können auch durch ihren Herstellungsweg strukturell umschrieben werden. Als Ausgangsverbindung können dabei insbesondere peripher substituierte Phthalocyaninato-Dichlorsilane [SiCl₂Pc^{s}] eingesetzt werden. Die Herstellung solcher Phthalocyaninato-Dichlorsilane ist bekannt und in der Literatur beschrieben. Sie können beispielsweise erhalten werden, indem man 5,6-substituiertes 1,3-Diiminoisoindolenin, wie z.B. 5,6-Dialkyl- bzw. 5,6-Dialkoxy-1,3-diiminoisoindolenin, in Gegenwart von Siliciumtetrachlorid nach der in Mol. Cryst. Liq. Cryst., Band 162B, Seiten 97-118 (1988) enthaltenen Vorschrift zu [SiCl₂Pc^{s}] umsetzt. Die Phthalocyaninatodichlorsilane [SiCl₂Pc^{s}] werden dann mit einem α-olefinisch ungesättigten primären Alkohol zu α-ω-olefin-terminierten Phthalocyaninatosiloxanen der allgemeinen Formel (IV)

Pc^{s}Si-(-O-R-CH=CH₂)₂ (IV)

umgesetzt. Diese α-ω-olefin-terminierten Phthalocyaninatosiloxane der allgemeinen Formel (IV), in der R die weiter oben angegebene Bedeutung zukommt, stellen den einen Baustein der erfindungsgemäßen Polymeren dar; zur Herstellung der erfindungsgemäßen Polymeren werden sie mit einem bifunktionellen Silan unter Katalyse mit geeigneten Katalysatoren, beispielsweise in Gegenwart von zweiwertigem Platin, in an sich bekannter Weise zur Reaktion gebracht. Wird als Disilan hierbei beispielsweise eine Verbindung des Typs HSi(R'R'')H verwendet, entstehen erfindungsgemäße Polymere mit wiederkehrenden Einheiten der allgemeinen Formel (I), in der Z dann eine Silicium-Kohlenstoff-Bindung bedeutet. Werden für die Reaktion mit den α,ω-olefin-terminierten Phthalocyaninatosiloxanen der allgemeinen Formel (IV) funktionelle Silane des Typs H-Si(R'R'')[-O-Si(R'R'')]ₘ-H eingesetzt (mit R', R'' und m entsprechend den vorstehend angegebenen Bedeutungen), so werden erfindungsgemäße Polymere erhalten, bei denen in den wiederkehrenden Einheiten der allgemeinen Formel (I) Z für eine -(O-SiR'R'')ₘ-Gruppe steht.

Die vorstehend anhand der Phthalocyaninatosiloxane illustrierte und beschriebene Herstellung der erfindungsgemäßen Polymeren gilt analog auch für die erfindungsgemäßen Polymeren, bei denen in den wiederkehrenden Einheiten der allgemeinen Formel (I) das Zentralmetallatom Me Germanium ist.

Die Umsetzung der Phthalocyaninato-Dichlorsilane mit den α-olefinisch ungesättigten primären Alkoholen erfolgt üblicherweise bei erhöhter Temperatur, insbesondere im Bereich von etwa 80 bis 130°C. Für die Umsetzung der α,ω-olefin-terminierten Phthalocyaninato-Siloxane mit den bifunktionellen Silanen liegen die Reaktionstemperaturen üblicherweise im Bereich von 30 bis 70°C.

Die neuen, erfindungsgemäßen Polymeren eignen sich aufgrund ihrer hervorragenden Eigenschaften für eine Vielzahl von Anwendungen, wie z.B. als Pigmente mit hoher Lichtechtheit in Lampen und Deckschichten für Gegenstände aller Art. Als sehr günstig hat sich die Verwendung der erfindungsgemäßen Polymeren zur Erzeugung von optisch klaren Filmen mit hoher Absorption im Bereich des sichtbaren Lichts erwiesen; solche Filme können beispielsweise als Lichtschutzfilter eingesetzt werden. Die erfindungsgemäßen Polymeren besitzen aufgrund ihrer Zusammensetzung wasserabweisende Eigenschaften und sind aus diesem Grund sowie aufgrund ihrer Dimensionsstabilität sehr geeignet für die Herstellung optischer Bauteile, welche unabhängig von der Luftfeuchtigkeit koventionellen, mit niedermolekularen Farbstoffen dotierten Filmen und Folien überlegen sind. Außerdem ist das farbgebende Element, nämlich das Phthalocyaninringsystem, fest im Polymeren verankert und kann daher nicht auswandern.

Insbesondere eignen sich die erfindungsgemäßen Polymeren zur Herstellung von sehr dünnen Schichten, beispielsweise einer Dicke im Bereich von 0,002 bis 5 µm. Ultradünne Schichten mit Monomolekularschichtstruktur (Monolayer) oder Multimolekularschichtstruktur (Multilayer) lassen sich aus den erfindungsgemäßen Polymeren in einfacher Weise mittels der an sich bekannten Langmuir-Blodgett-Technik (im weiteren auch "LB-Technik" oder "LB-Verfahren" genannt) herstellen. Hierzu werden die erfindungsgemäßen Polymeren in einem organischen, mit Wasser nicht mischbaren Lösungsmittel, z.B. Chloroform, gelöst und wird diese Lösung auf die Wasseroberfläche einer Langmuir-Filmwaage gespreitet und unter Verdunsten des Lösungsmittels eine Monomolekularschicht der erfindungsgemäßen Polymeren auf der Wasseroberfläche gebildet. Dieser Oberflächenfilm an der Grenzfläche Luft/Wasser wird dann mittels der beweglichen Barriere der Filmwaage soweit komprimiert, daß eine definierte, festanaloge Schicht aus nur einer Moleküllage entsteht. Diese monomolekulare Schicht aus den erfindungsgemäßen Polymeren wird dann durch gegebenenfalls wiederholtes Ein- und Austauchen eines Trägers bei konstantem Oberflächendruck auf diesen Träger übertragen. Hierbei wird üblicherweise in einem Temperaturbereich von etwa 0 bis 50°C gearbeitet. Die Zahl der Tauchvorgänge bestimmt die Zahl der auf den Träger abgelegten Schichten. Durch mehrfaches Wiederholen des Ein- bzw. Austauchens kann dabei ein Film mit Multimolekular-Schichtstruktur auf dem Träger gebildet werden. Zur Herstellung der erfindungsgemäßen ultradünnen Schichten wird der Träger vorzugsweise senkrecht zur Wasseroberfläche ein- bzw. ausgetaucht, um den auf der Wasseroberfläche erzeugten Molekularfilm auf den Träger zu übertragen.

Die nach der LB-Technik aus den erfindungsgemäßen Polymeren hergestellten ultradünnen, festen Schichten besitzen eine definierte einheitliche und regelmäßige Struktur mit homogenem, molekular kontrolliertem Aufbau ohne Domänenbildung in den einzelnen Lagen bzw. Schichten. Diese nach der LB-Technik aus den erfindungsgemäßen Polymeren hergestellten ultradünnen Schichten oder Filme sind optisch klar und zeichnen sich durch ihre optische Anisotropie bei einer extrem hohen Volumenkonzentration an Phthalocyaninresten aus. Diese ultradünnen Schichten bzw. Filme eignen sich daher mit besonderem Vorteil z.B. als Wellenleiter für optische Zwecke, als Polarisatoren, als nicht-linear-optisch wirksame Bauelemente, z.B. zur Frequenzverdreifachung von IR-Laserlicht und dgl. Hierbei ist es noch ein besonderer Vorteil, daß die optische Absorption der erfindungsgemäßen Polymeren unabhängig von der Volumenkonzentration ist. Aufgrund der Bildung von Aggregaten ist bei Phthalocyaninen und ähnlichen Farbstoffen üblicherweise eine konzentrationsabhängige Änderung der Spektren zu verzeichnen. Diese Aggregation wird bei den erfindungsgemäßen Polymeren trotz hoher Farbstoffkonzentration unterbunden. Die erfindungsgemäßen Polymeren bzw. die hieraus hergestellten ultradünnen Schichten bzw. Filme zeigen daher Spektren, die, bezogen auf die üblichen Phthalocyanine, rotverschoben sind.

Als Schichtträger für die Herstellung der ultradünnen Schichten aus den erfindungsgemäßen Polymeren nach der LB-Technik kommen die an sich für diesen Zweck üblichen und bekannten, festen, vorzugsweise dimensionsstabilen Träger in Betracht, wie sie beispielsweise in der eingangs zitierten EP-A-246 500 für diesen Zweck beschrieben sind. Die Schichtträger können dabei transparent oder lichtundurchlässig, elektrisch leitend oder isolierend sein. Wesentlich ist, daß die Oberfläche der Träger, auf die die Monomolekularschichten der erfindungsgemäßen Polymeren aufgebracht werden, hydrophob ist. Als Materialien für die Schichtträger kommen beispielsweise Metalle, Kunststoffe, Glas, keramische Werkstoffe oder Zelluloseprodukte, wie Papiere, in Betracht. Für optische Elemente werden in aller Regel transparente, lichtdurchlässige Träger, beispielsweise aus Glas oder Kunststoffen, wie z.B. Polyester, eingesetzt.

Die Erfindung wird durch die nachfolgenden Beispiele näher erläutert. In den nachfolgenden Beispielen bedeutet Pc^{s} ein octa-substituiertes Phthalocyaninringsystem des allgemeinen Formelbildes (III), wobei die Reste R' und R'' gleich sind und jeweils für einen langkettigen Alkoxy-Rest stehen.

### Beispiel 1

Zur Herstellung eines Polymeren, aufgebaut aus wiederkehrenden Einheiten der allgemeinen Formel (I), worin R für eine -C₂H₄-Gruppe und Z für eine -(O-Si(CH₃)₂)ₘ-Gruppe mit m = 3 steht, wurde folgendermaßen verfahren:

Unter Stickstoff wurden 300 mg (241 µmol) [SiCl₂Pc^{s}], 255,6 mg (721 µmol) TlCF₃SO₃ und 100 mg 1,12-Diaminododecan in 2,5 ml 3-Buten-1-ol unter Rückfluß 2 Stunden erhitzt. Der beim Abkühlen ausfallende Niederschlag wurde abfiltriert, in 5 ml Chloroform gelöst, die Lösung filtriert, und das Filtrat mit 25 ml Methanol versetzt. Darauf fielen 293 mg (95 %) der Verbindung [Pc^{s}Si(OC₂H₄CH=CH₂)₂] in Form eines grünen Niederschlages aus, der abfiltriert und getrocknet wurde. Das so erhaltene Produkt wies folgende NMR-Kenndaten auf:

| | | | |
|---|---|---|---|
| ¹H-NMR: | Olefin-H: | m 3,71 ppm | 1H |
| | | m 3,28 ppm | 2H |
| | Alkyl-H: | m -1,04 ppm | 2H |
| | | t -2,06 ppm | 2H ³J(H,H) = 6,7 Hz |
| ¹³-C-NMR: | Alkyl-C: | 54,79 ppm, 34,27 ppm | |

Von diesem Produkt wurden 107,6 mg (82 µmol) unter Stickstoff bei 60°C in 1 ml Toluol mit ca. 0,5 mg Trans-Dichloro(anilin)(styrol)platin (II) versetzt und 15 Minuten gerührt. Hierauf wurden 0,5 ml einer Lösung von 46,2 mg (163 µmol) des bifunktionellen Silans H[SiO(CH₃)₂]₃Si(CH₃)₂H in 1 ml Toluol zugeführt und 21 Stunden bei 60°C belassen. Nach Zugabe von 10 ml Methanol, Abfiltration und Trocknen des erhaltenen Niederschlages wurden 93,7 ml (72 %) des gewünschten Polymeren mit einem mittleren Polymerisationsgrad von 9,3 erhalten.

Dieses Polymere wurde in Chloroform gelöst und auf der Wasseroberfläche einer Langmuir-Filmwaage gespreitet. Das in üblicherweise aufgenommene Schub-Flächen-Diagramm zeigte folgende Kenndaten:
- Beginn des Druckanstieges:: 135 Å² / Monomereinheit
- Beginn des Plateaus:: 105 Å² / Monomereinheit
Der Druck bei Beginn des Plateau betrug 32 mN/m. Der auf der Wasseroberfläche gespreitete Monomolekularfilm des Polymeren wurde auf die hydrophobe Oberfläche eines transparenten Glas-Trägers durch senkrechtes Ein- bzw. Austauchen des Trägers in die Wasseroberfläche übertragen. Der Tauchvorgangwurde so oft wiederholt, bis sich auf dem Glas-Träger ein Film einer Dicke von 0,1 µm gebildete hatte. Die UV-Absorptionskante lag bei 678 nm (λₘₐₓ). Die Absorption von linear polarisiertem Licht hing bei senkrechtem Einfall auf die Ebene des Trägers vom Winkel zwischen Polarisationsebene und Tauchrichtung ab, und zwar einheitlich über die Gesamtfläche des Films. Das Intensitätsverhältnis bei um 90° verdrehter Polarisation betrug 1,4 bis 1,5 (694 nm). Dies ist ein Beleg dafür, daß das erfindungsgemäße Polymer auf dem Träger in einer Vorzugsrichtung angeordnet ist, und zwar senkrecht zur Aufziehrichtung.

### Beispiele 2 und 3

Es wurden entsprechende Polymere wie in Beispiel 1 hergestellt, nur daß diesmal Z in der allgemeinen Formel (I) zum einen für eine Si-C-Bindung (Beispiel 2) und zum anderen für eine -Ph-Si(CH₃)₂-Gruppe (Beispiel 3) stand.

Es wurde wie in Beispiel 1 verfahren unter entsprechender Änderung der Versuchsvorschrift, d.h. in Beispiel 2 wurde H₂SiPh₂ und in Beispiel 3 HSi-Ph-SiH als bifunktionelle Silanverbindung eingesetzt. Das Polymere von Beispiel 2 wurde in einer Ausbeute von 86 % erhalten und hatte einen mittleren Polymerisationsgrad von 84,8. Der mittlere Polymerisationsgrad des in 81 %iger Ausbeute erhaltenen Polymeren gemäß Beispiel 3 betrug 15,7. Die Polymeren wurden durch die jeweiligen UV-, IR- und NMR-Spektren charakterisiert, die sich von denen des Polymeren gemäß Beispiel 1 nicht wesentlich unterschieden. Die gemäß Beispielen 2 und 3 hergestellten Polymeren wurden, wie in Beispiel 1 beschrieben, auf die Wasseroberfläche einer Langmuir-Filmwaage gespreitet, und es wurde das jeweilige Schub-Flächen-Diagramm aufgenommen. Es wurden die nachfolgenden Meßwerte ermittelt:

### für Beispiel 2:

- Beginn des Druckanstiegs: = 162 Å² / Monomereinheit
- Beginn des Plateaus: = 117 Å² / Monomereinheit
- Druck am Plateaubeginn: = 32 mN/m

### für Beispiel 3:

- Beginn des Druckanstiegs: = 195 Å² / Monomereinheit
- Beginn des Plateaus: = 136 Å² / Monomereinheit
- Druck am Plateaubeginn: = 33 mN/m.

## Patentansprüche

1. Polymere, aufgebaut aus wiederkehrenden Einheiten der allgemeinen Formel (I) 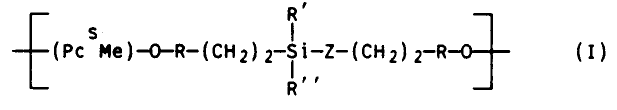 worin bedeuten:
Pc^{s}: einen zweifach an den zum Zentrum gerichteten Stickstoffatomen deprotonierten Phthalocyaninrest mit peripheren Substituenten;
Me: Si oder Ge als das in die Polymerhauptkette eingebundene Zentralmetallatom des Phthalocyaninringsystems Pc^{s};
R: eine lineare oder verzweigte Alkylen-Gruppe mit 1 bis 18 C-Atomen;
R', R'': gleiche oder verschiedene Reste und unabhängig voneinander einen Alkyl-Rest, einen Cycloalkyl-Rest, einen unsubstituierten oder alkylsubstituierten Phenyl-Rest oder einen Alkoxy-Rest;
Z: entweder eine Silicium-Kohlenstoff-Bindung oder eine der Gruppen 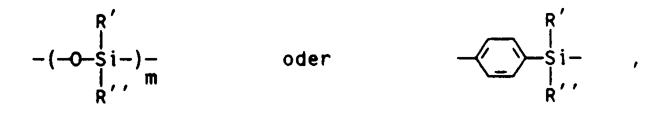 worin m für eine ganze Zahl gleich oder größer 1 steht und R' und R'' die vorstehend angegebene Bedeutung haben.

2. Ultradünne Schichten, hergestellt aus Polymeren gemäß Anspruch 1 mittels der Langmuir-Blodgett-Technik.

3. Optisch klare Filme, hergestellt aus Polymeren gemäß Anspruch 1.

4. Schichtelemente, enthaltend auf einem Schichtträger mit hydrophober Oberfläche ultradünne Schichten gemäß Anspruch 2 oder optisch klare Filme gemäß Anspruch 3.

## Claims

1. A polymer consisting of repeating units of the formula (I) 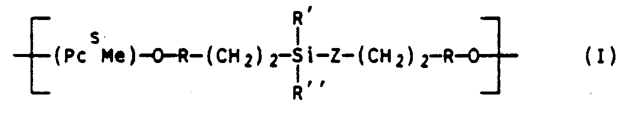 where
Pc^{s} is a phthalocyanine radical which is doubly deprotonated at the nitrogen atoms pointing toward the center and has peripheral substituents,
Me is Si or Ge, as the central metal atom of the phthalocyanine ring system Pc^{s}, which atom is bonded in the polymer main chain,
R is a linear or branched alkylene group of 1 to 18 carbon atoms,
R' and R'' are identical or different radicals and independently of one another are each alkyl, cycloalkyl, unsubstituted or alkyl-substituted phenyl, or alkoxy, and
Z is either a silicon-carbon bond or one of the groups 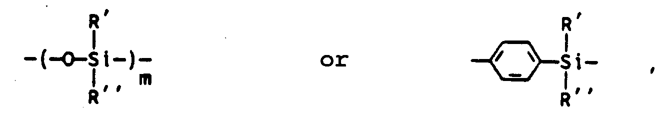 where m is an integer equal to or greater than 1, and R' and R'' have the abovementioned meanings.

2. An ultrathin layer, produced from a polymer as claimed in claim 1 by the Langmuir-Blodgett technique.

3. An optically transparent film, produced from a polymer as claimed in claim 1.

4. A layer element, containing ultrathin layers as claimed in claim 2 or optically transparent films as claimed in claim 3 on a substrate having a hydrophobic surface.

## Revendications

1. Polymères constitués de motifs répétitifs de la formule générale I 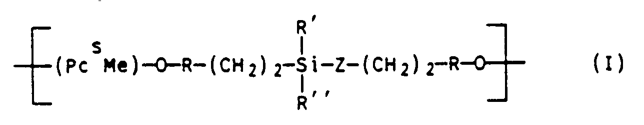 dans laquelle
Pcs représente un reste phtalocyanine à substituants périphériques, déprotonisé deux fois sur les atomes d'azote dirigés vers le centre
Me Si ou Ge, en tant qu'atome métallique central du système cyclique phtalocyanine Pcs, lié dans la chaîne polymère principale
R un groupe alkylène de 1 à 18 atomes C, linéaire ou ramifié
R', R'' des restes identiques ou différents et indépendamment les uns des autres, un reste alkyle, un reste cycloalkyle, un reste phényle non substitué ou substitué sur l'alkyle ou un reste alcoxy.
Z soit une liaison silicium-carbone ou un des groupes 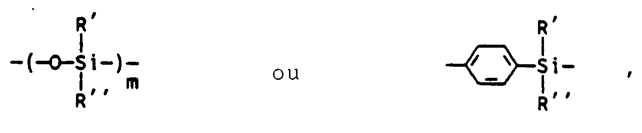 où m est mis pour un nombre entier égal ou supérieur à 1 et R' et R'' ont les significations indiquées plus haut.

2. Couches ultra-minces, préparées à partir de polymères selon la revendication 1 au moyen de la technique Langmuir-Blodgett.

3. Films optiquement clairs, préparés à partir de polymères selon la revendication 1.

4. Eléments stratifiés contenant sur un support de couche à surface hydrophobe des couches selon la revendication 2 ou des films optiquement clairs selon la revendication 3.
